# EUROPEAN PATENT SPECIFICATION

(11) **EP 0 334 512 B1**
(45) Date of publication and mention of the grant of the patent: **06.12.1995**
(21) Application number: 89302338.2
(22) Date of filing: 09.03.1989
(51) Int. Cl.: G11B 5/11, G11B 5/147

(54) **Magnetic head**
Magnetkopf
Tête magnétique

(30) Priority: 23.03.1988 JP 68590/88
(43) Date of publication of application: 27.09.1989
(73) Proprietor: MATSUSHITA ELECTRIC INDUSTRIAL CO., LTD., Kadoma-shi, Osaka-fu, 571 (JP)
(72) Inventor: Yohda, Hiroshi, Hirakata Osaka 573 (JP); Inoue, Yasushi, Neyagawa Osaka 572 (JP)
(74) Representative: Crawford, Andrew Birkby

(56) References cited:
- EP-A- 0 128 586
- PATENT ABSTRACTS OF JAPAN vol. 8, no. 282 (P-323)(1719) 22 December 1984 & JP- A-59-146425
- PATENT ABSTRACTS OF JAPAN vol. 10, no. 60 (P-435)(2117) 11 March 1986 & JP-A- 60-202504

## Description

This invention relates to a magnetic head, and more particularly to a ring-shaped magnetic head possessing a metal magnetic core appropriate for recording and reproducing signals efficiently and also to prevention of electrostatic noise thereof.

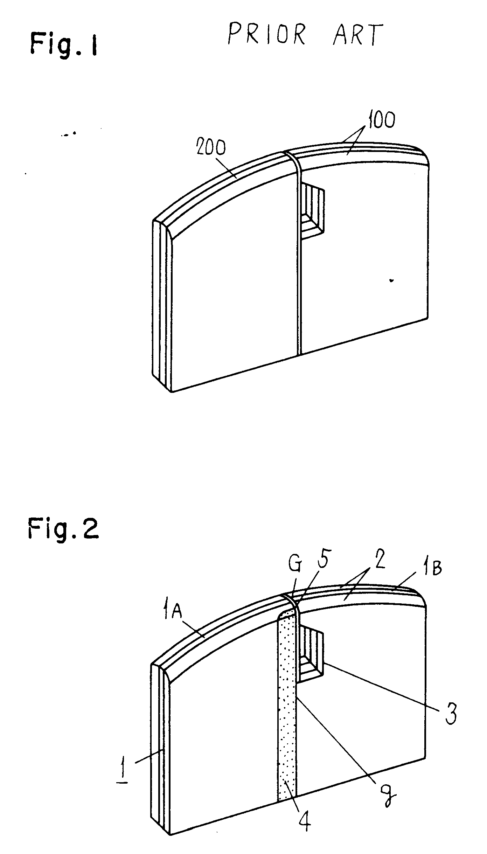

Recently, systems handling signals in a wide band such as high definition VTR (Video Tape Recorder) and digital VTR are intensively developed. In this situation, the recording medium is enhanced in density so as to be capable of recording a large quantity of information, and in this trend the iron oxide compounds are being replaced by alloy powder, metal evaporated film or other recording media higher in coercive force. By contrast, the ferrite magnetic head for recording and reproducing signals on the recording medium has the saturated magnetic flux density of only about 5,000 gauss at maximum, the pole tip is saturated in the recording of the high coercive medium with Hc of 1,000 Oe or more as mentioned above, and sufficient recording is impossible. Accordingly, a ring-shaped magnetic head structured as shown in FIG.1 using metal magnetic material such as sendust and amorphous magnetic alloy having a high maximum magnetic flux density has been developed. In this structure, a metal magnetic core 200 is held by a nonmagnetic substrate 100.

EP-A-0128585 describes a ring-shaped magnetic head using magnetic core blocks of amorphous magnetic alloy opposing across a non-magnetic gap, the pair of core blocks being held from both sides by non-magnetic substrates. In order to obtain an accurate gap size and reliable bonding the core blocks are butted together with a high lead glass bond therebetween. The high lead glass layer being formed on a metal layer.

In thus composed magnetic head, when the non-magnetic substrate 100 holding the metal magnetic core 200 is insulating, spotty noise may be formed on the reproduced image of the VTR. Such noise is also experienced in ferrite head. Its cause is considered to be due to discharge generated on the head surface due to electrostatic charge with the tape, and it was believing to be sliding by grounding the magnetic core so as to allow this electric charge to escape. In the Japanese Utility Model Publication No. 62-41377 is disclosed a head structure capable of preventing such noise by adhering the magnetic core to the head base with a conductive adhesive and grounding the magnetic core electrically. However, the adhesion of the conductive adhesive is weak as compared with that of general adhesives, and the reliability of adhesion tends to be inferior, and when the entire head is not conductive such as the head in structure of holding the metal magnetic core by a ceramic substrate, if the metal magnetic core is thin, conduction may not be always obtained perfectly depending on the size of the conductive particles of the conductive adhesive. Or, in the case of a head mounted on an insulating ceramic head base such as dynamic tracking head using piezoelectric element, it is necessary to wind around the conductor in order to ground the magnetic core, which resulted in complicated structure.

As described in Patent Abstracts of Japan, vol. 8, no. 282 (P-323)(1719) of 22nd December 1984, JP-A-59146425 discloses a composite magnetic head in which noise is said to be reduced by electrically connecting the magnetic core blocks to a substrate on which the head is mounted.

In order to solve the above-discussed problems, this invention is intended to present a magnetic head having a pair of magnetic cores disposed opposedly across a gap conducting with each other electrically.

That is, the present inventors have discovered that the electrostatic noise is caused, not by the discharge of the electric charge accumulated on the head surface into other parts, but by the discharge generated across the gap due to the potential difference derived from the difference in the quantity of electric charge charged in a pair of magnetic cores opposing to each other through a non-magnetic gap film such as SiO₂ and glass. It is hence found that, to prevent this noise, it is sufficient to eliminate the potential difference between a pair of magnetic cores by electrically connecting them, without having to ground the magnetic cores. Therefore, when the head is designed so that a pair of magnetic cores may conduct electrically, it is possible to prevent generation of noise by the head alone, and it is necessary neither to connect to the head base with conductive adhesive, nor to ground by wiring about the conductor if disposed on an insulating head substrate.

The present invention provides a use of an electrical connection only between a pair of magnetic cores opposing across a non-magnetic gap and held from both sides by non-magnetic substrates, making up a magnetic head, to reduce potential difference between the magnetic cores arising from unequal build up of charge during operation of the magnetic head, whereby to reduce spotty noise.

While the novel features of the invention are set forth in the appended claim, the invention, both as to organization and content, will be better understood and appreciated, along with other objects and features thereof, from the following detailed description of the invention taken in conjunction with the drawings.
FIG. 1 is a perspective view of a conventional magnetic head;
FIG. 2 is a perspective view of a first embodiment of a magnetic head of this invention;
FIG. 3 is a perspective view of a second embodiment of a magnetic head of the invention; and
FIG. 4 and FIG. 5 are perspective views showing the manufacturing method of the magnetic head in a embodiment of the invention.

A perspective view of a first embodiment of the invention is shown in FIG. 2, in which numeral 1 is a magnetic core of thin sheet made of metal magnetic film such as Co amorphous alloy and sendust, and this magnetic core 1 is held by nonmagnetic substrates 2 made of calcium titanate ceramics or the like. The magnetic core 1 is separatea into a pair of magnetic cores 1A, 1B, and these magnetic cores 1A, 1B are, in their upper part, opposite to each other through a nonmagnetic gap film 5 formed at the part of a front magnetic gap G, and, in their rear part, in contact with each other directly, and moreover they are joined together by bonding glass 4. In such structure, the pair of magnetic cores 1A, 1B contact with each other directly at a rear magnetic gap g as mentioned above so as to conduct, and when they are placed on an insulating head base such as ceramics, noise is not generated if not grounded. Incidentally, numeral 3 denotes a winding window.

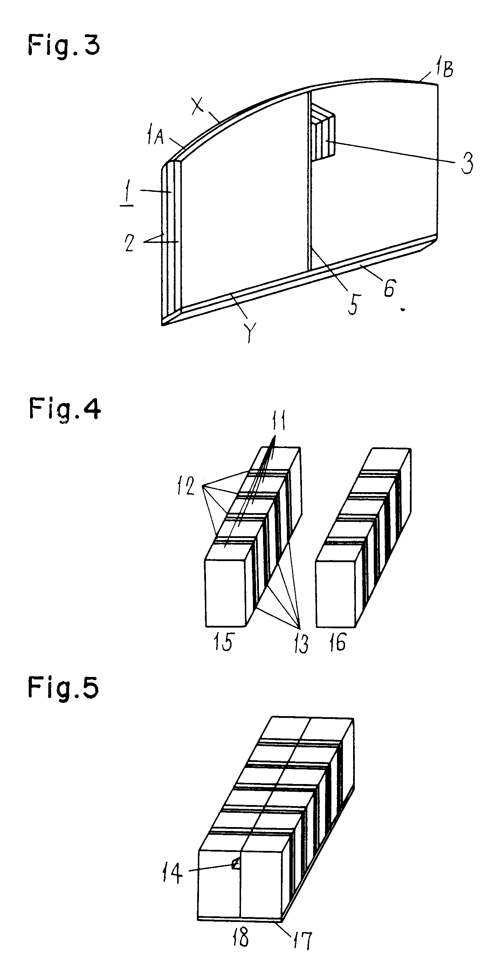

A perspective view of a second embodiment of the invention is shown in FIG. 3. In the head according to this embodiment, the two magnetic cores opposing across a magnetic gap conduct to each other by a conductive thin film 6 such as Cr and Cu formed on a plane Y opposite to a magnetic recording medium opposing plane X of the head. In this case, the pair of magnetic cores 1A, 1B do not contact with each other directly, but are separated into right and left side by a nonmagnetic gap film 5.

The manufacturing method of such magnetic head is explained below while referring to FIGS. 4 and 5. In the first place, a metal magnetic film 12 is formed on a nonmagnetic substrate 11 by sputtering, and a plurality thereof are laminated and adhered with crystallized glass 13 or the like, and then cut off, thereby fabricating a pair of core blocks 15, 16 having the metal magnetic film and nonmagnetic substrate laminated alternately. One of the pair of core blocks is a C-shaped core block forming a winding window 14, while the other is directly formed as an I-shaped core block. Afterwards, the gap faces of the both core blocks are polished to a mirror-smooth surface, and a nonmagnetic thim film of glass or the like is formed to a specified film thickness, and is joined and adhered with bonding glass, and a metal thin film of Cr or the like in a thickness of about 1 »m is formed on the opposite side of the side of the magnetic recording medium sliding face by a proper method such as sputtering and evaporation, thereby obtaining a core block 18. Later it is cut to a specified thickness, and the front side is tape lapped, so that the magnetic head as shown in FIG. 3 may be manufactured.

Other embodiment of the magnetic head manufacturing method of this invention is explained below. By the same method as in the first mebodiment of the manufacturing method, an I-shaped core and a C-shaped core are adhered through a magnetic gap, and a core block is formed. Then, through the magnetic gap, a voltage is applied between the opposing magnetic cores, and the insulation of the magnetic gap film is broken down. In this case, the voltage to be applied is, when the gap length is, for example, 0.3 »m, about 100V. When the current during insulation breakdown is adjusted, the resistance between the two cores will drop from the infinity to less than several kilo-ohms. To connect the metal magnetic core and the lead wire for passing current, when the magnetic cores are held by conductive resin from both sides, many head cores may be processed easily.

According to this invention, the noise occurring due to the electrostatics generated due to sliding with the recording medium may be prevented by the head alone, without resort to the conductive adhesive for linking between the head and head base or the conductor for grounding in the case of the head on an insulating head base, so that an excellent reliability will be obtained in a simple structure. Furthermore, according to the manufacturing method of this invention, since the processing for conducting between two cores can be achieved in a laminated state of multiple head chips in the midst of manufacture of head, and the number of processes for manufacture may not be increased so much.

## Claims

1. Use of an electrical connection only between a pair of magnetic cores opposing across a non-magnetic gap and held from both sides by non-magnetic substrates, making up a magnetic head, to reduce potential difference between the magnetic cores arising from unequal build up of charge during operation of the magnetic head, whereby to reduce spotty noise.

## Patentansprüche

1. Einsatz einer elektrischen Verbindung lediglich zwischen einem Paar Magnetkerne, die einander über einen nichtmagnetischen Spalt gegenüberliegend angeordnet sind und von beiden Seiten durch nichtmagnetische Träger gehalten werden und einen Magnetkopf bilden, um Potentialdifferenz zwischen den Magnetkernen zu verringern, die durch den ungleichmäßigen Aufbau von Ladung während der Funktion des Magnetkopfes entsteht, so daß Punktrauschen verringert wird.

## Revendications

1. Application d'une connexion électrique uniquement entre une paire de noyaux magnétiques opposés de part et d'autre d'un espace non magnétique et maintenus des deux côtés par des substrats non magnétiques, constituant une tête magnétique, afin que la différence de potentiel entre les noyaux magnétiques, due à une accumulation inégale de charge lors du fonctionnement de la tête magnétique, soit réduite et permette ainsi la réduction du bruit générateur de taches.
